# EUROPEAN PATENT APPLICATION

(11) **EP 3 739 878 A1**
(43) Date of publication of application: **18.11.2020**
(21) Application number: 18900144.9
(22) Date of filing: 10.08.2018
(51) Int. Cl.: H04N 7/18, H04N 21/845, H04N 21/472

(54) **SURVEILLANCE VIDEO DATA PROCESSING METHOD AND APPARATUS FOR BATTERY CHARGING AND SWAPPING STATION**

(30) Priority: 11.01.2018 CN 201810027943
(71) Applicant: Nio Nextev Limited, Hong Kong (CN)
(72) Inventor: YANG, Leijun, Shanghai 201804 (CN)
(74) Representative: Laine IP Oy
(86) International application number: PCT/CN2018/100029
(87) International publication number: WO 2019/136995

(57) **Abstract**

The invention relates to a surveillance video data processing method and apparatus for a battery charging and swap station, the method comprising: collecting device data and surveillance point data; pre-processing the device data and the surveillance point data respectively to obtain pre-processed device data and pre-processed surveillance point data; and encoding, packaging, and transmitting the pre-processed device data and the pre-processed surveillance point data so as to form a data transmission stream. According to the invention, real-time data and related alarm data of a device such as a battery are associated while a video surveillance system collects audio and video data of a station, which has a good real-time characteristic, and richer real-time information is provided at a video surveillance terminal, thereby improving the operation and maintenance efficiency of the battery charging and swap station.

## Description

### Technical Field

The invention relates to the technical field of battery charging and swap stations for electric vehicles, and in particular to a surveillance video data processing method and apparatus for a battery charging and swap station.

### Background Art

With the continuous popularization of electric vehicles and the advancement of construction of integrated power-up (battery charging and swap) systems, real-time surveillance risk control of a battery charging and swap station and processing efficiency of a fault will become increasingly more important. At present, a video surveillance system has been introduced into most battery charging and swap stations, and operation and maintenance personnel can acquire the on-site situation on a video surveillance terminal in real time. However, the existing video surveillance system generally stores data in the cloud. In order to improve network bandwidth utilization, data is uploaded in a changing manner or within a certain threshold range. In the case of unstable networks, surveillance data may be incomplete and easy to lose, resulting in poor data integrity. In addition, the existing video surveillance system does not display device data and alarm information in real time, and provides only on-site audio and video data. The operation and maintenance personnel cannot acquire the required detailed information in real time according to a surveillance video, for example, a voltage, a current, a temperature, and an alarm of a battery during charging. When the information above needs to be acquired, the surveillance video needs to be viewed, and other applications are enabled for comparison, which is inconvenient, resulting in low efficiency of operation and maintenance.

Therefore, the following problem needs to be solved urgently: how to effectively combine on-site audio and video data with on-site surveillance data, and associate real-time data and related alarm information of a device such as a battery while a video surveillance system collects on-site audio and video data of a station, so that a video surveillance terminal can provide richer real-time information and operation and maintenance efficiency can be improved.

### Summary of the Invention

The technical problem to be solved by the invention is to provide a surveillance video data processing method and apparatus for a battery charging and swap station, wherein real-time data and related alarm data of a device such as a battery are associated while a video surveillance system collects audio and video data of a station, which has a good real-time characteristic, and richer real-time information is provided at a video surveillance terminal, thereby improving the operation and maintenance efficiency of the battery charging and swap station.

In order to solve the above technical problem, the invention provides a surveillance video data processing method for a battery charging and swap station, which comprises the steps of:
collecting device data and surveillance point data;
pre-processing the device data and the surveillance point data respectively to obtain pre-processed device data and pre-processed surveillance point data; and
encoding, packaging, and transmitting the pre-processed device data and the pre-processed surveillance point data so as to form a data transmission stream.

Further, the method further comprises:
decoding the data transmission stream and displaying a decoded result.

Further, said collecting device data and surveillance point data comprises the steps of:
setting a device data detection point and a surveillance point that need to be monitored;
collecting the corresponding device data according to the set device data detection point; and
collecting the corresponding surveillance point data according to the set surveillance point.

Further, the device data comprises real-time device data and device alarm information, and the surveillance point data comprises surveillance point audio data and surveillance point video data.

Further, the real-time device data comprises one or more of battery information, battery charging and swap vehicle information, charging pile information, battery compartment information, water cooling system information, and limit switch information,
wherein the battery information comprises one or more of battery position information, battery charging and discharging currents, battery charging and discharging voltages, battery charging and discharging temperatures, a battery cell current, a battery cell voltage, and a battery cell temperature;
the alarm information comprises one or more of battery alarm information, battery charging and swap vehicle alarm information, charging pile alarm information, water cooling system alarm information, limit switch alarm information, and environmental monitoring system alarm information; and
the surveillance point video data comprises normal video image data and thermal imaging data.

Further, said pre-processing the device data and the surveillance point data respectively comprises the steps of:
setting a sampling frequency, recording the device data according to the sampling frequency, and caching the device data to generate a device data snapshot for a corresponding time point; and
setting a video format and a code rate, and encoding the surveillance point data according to the video format and the code rate so as to form a video fragment and an audio fragment.

Further, said encoding, packaging, and transmitting the pre-processed device data and the pre-processed surveillance point data so as to form a data transmission stream comprises:
setting a video protocol, and carrying the device data snapshot according to an extension of the set video protocol;
identifying the device data snapshot, the video fragment, and the audio fragment by groups, and packaging the device data snapshot, the video fragment, and the audio fragment according to a preset data transmission packet structure, so as to generate a data transmission packet; and
transmitting and delivering the data transmission packet through a network so as to form the data transmission stream.

Further, the data transmission packet structure comprises:
a group identifier data segment, a device number data segment, a time stamp data segment, a position information data segment, a priority data segment, and a content carrying data segment, wherein the content carrying data segment is used to carry the audio fragment, the video fragment, and the device data snapshot.

Further, said decoding the data transmission stream and displaying a decoded result comprises:
decoding and caching the data transmission stream; and
reading, by a surveillance terminal, cached data, and displaying the cached data.

Further, the surveillance terminal draws the cached data on a video picture according to coordinate information of a device, so as to display a surveillance picture and related device information and alarm information.

Further, the method further comprises: extracting and storing a device feature value according to device position information; and dynamically identifying a local feature of a corresponding device in a surveillance image when a surveillance terminal plays a video, matching the local feature with the device feature value, and performing AR scene display on the device in the surveillance image if the matching succeeds.

Further, the method further comprises: storing the video fragment, the audio fragment, and the data snapshot in a memory buffer of a surveillance terminal according to a preset time, and performing time shift and playback operations on a surveillance picture by setting a click button on the surveillance terminal or by dragging a progress bar.

A surveillance video data processing apparatus for a battery charging and swap station comprises:
a data collection module configured to collect device data and surveillance point data;
a data pre-processing module configured to pre-process the device data and the surveillance point data respectively to obtain pre-processed device data and pre-processed surveillance point data; and
a data transmission module configured to encode, package, and transmit the pre-processed device data and the pre-processed surveillance point data so as to form a data transmission stream.

Further, the apparatus further comprises:
a data display module configured to decode the data transmission stream and display a decoded result.

Further, the data collection module comprises:
a setting unit configured to set a device data detection point and a surveillance point that need to be monitored;
a device data collection unit configured to collect the corresponding device data according to the set device data detection point; and
a surveillance point data collection unit configured to collect the corresponding surveillance point data according to the set surveillance point.

Further, the device data comprises real-time device data and device alarm information, and the surveillance point data comprises surveillance point audio data and surveillance point video data.

Further, the real-time device data comprises one or more of battery information, battery charging and swap vehicle information, charging pile information, battery compartment information, water cooling system information, and limit switch information,
wherein the battery information comprises one or more of battery position information, battery charging and discharging currents, battery charging and discharging voltages, battery charging and discharging temperatures, a battery cell current, a battery cell voltage, and a battery cell temperature;
the alarm information comprises one or more of battery alarm information, battery charging and swap vehicle alarm information, charging pile alarm information, water cooling system alarm information, limit switch alarm information, and environmental monitoring system alarm information; and
the surveillance point video data comprises normal video image data and thermal imaging data.

Further, the data pre-processing module comprises:
a device data pre-processing unit configured to set a sampling frequency, record device data according to the sampling frequency, and cache the device data to generate a device data snapshot for a corresponding time point; and
a surveillance point data processing unit configured to set a video format and a code rate, and encode the surveillance point data according to the video format and the code rate so as to form a video fragment and an audio fragment.

Further, the data transmission module comprises:
a video protocol setting unit configured to set a video protocol, and carry the device data snapshot according to an extension of the set video protocol;
a data transmission packet generation unit configured to identify the device data snapshot, the video fragment, and the audio fragment by groups, and package the device data snapshot, the video fragment, and the audio fragment according to a preset data transmission packet structure, so as to generate a data transmission packet; and
a data transmission unit configured to transmit and deliver the data transmission packet through a network so as to form the data transmission stream.

Further, the data transmission packet structure comprises:
a group identifier data segment, a device number data segment, a time stamp data segment, a position information data segment, a priority data segment, and a content carrying data segment, wherein the content carrying data segment is used to carry the audio fragment, the video fragment, and the device data snapshot.

Further, a data display module comprises:
a data caching module configured to decode and cache the data transmission stream; and
a surveillance terminal configured to read cached data and display the cached data.

Further, the surveillance terminal is further configured to draw the cached data on a video picture according to coordinate information of a device, so as to display a surveillance picture and related device information and alarm information.

Further, the apparatus further comprises an AR scene display module configured to: extract and store a device feature value according to device position information; and dynamically identify a local feature of a corresponding device in a surveillance image when a surveillance terminal plays a video, match the local feature with the device feature value, and perform AR scene display on the device in the surveillance image if the matching succeeds.

Further, the apparatus further comprises a picture time-shift and rollback module configured to store the video fragment, the audio fragment, and the data snapshot in a memory buffer of a surveillance terminal according to a preset time, and perform time shift and playback operations on a surveillance picture by setting a click button on the surveillance terminal or by dragging a progress bar.

According to a further aspect of the invention, a controller is provided, which comprises a memory and a processor, wherein the memory stores a computer program that, when executed by the processor, is capable of implementing the steps of the method.

According to a further aspect of the invention, a computer readable storage medium for storing a computer program is provided, wherein the program, when executed by a computer or a processor, implements the steps of the method.

The invention has obvious advantages and beneficial effects as compared with the prior art. By means of the technical solution described above, the surveillance video data processing method and apparatus for a battery charging and swap station according to the invention can achieve considerable technical progress and practicability, have a wide range of industrial utility value, and have at least the following advantages:
(1) real-time data and related alarm data of a device such as a battery are associated while a video surveillance system collects audio and video data of a station, which has a good real-time characteristic;
(2) richer real-time information is provided at a video surveillance terminal, thereby improving the operation and maintenance efficiency and experience of the battery charging and swap station.

The description above is only summary of the technical solutions of the invention. In order to understand the technical means of the invention more clearly for implementation according to the content of the specification, and in order to make the above and other objectives, features and advantages of the invention more apparent and easy to be understood, preferred embodiments are especially taken as examples in conjunction with the drawings, and the detailed description is as follows.

### Brief Description of the Drawings

FIG. 1 is a flowchart of a surveillance video data processing method for a battery charging and swap station according to one embodiment of the invention.
FIG. 2 is a schematic diagram of surveillance video data processing for a battery charging and swap station according to one embodiment of the invention.
FIG. 3 is a schematic diagram of a display effect of surveillance video data of a battery charging and swap station according to one embodiment of the invention.
FIG. 4 is a schematic diagram of implementation of time shift and playback of surveillance video data of a battery charging and swap station according to one embodiment of the invention.
FIG. 5 is a schematic diagram of a surveillance video data processing apparatus for a battery charging and swap station according to one embodiment of the invention.

### Detailed Description of Embodiments

In order to further illustrate the technical means and effects adopted by the invention to achieve the intended objectives of the invention, detailed description of embodiments of a surveillance video data processing method and apparatus for a battery charging and swap station provided in accordance with the invention and effects thereof are described below in detail in conjunction with the drawings and preferred embodiments.

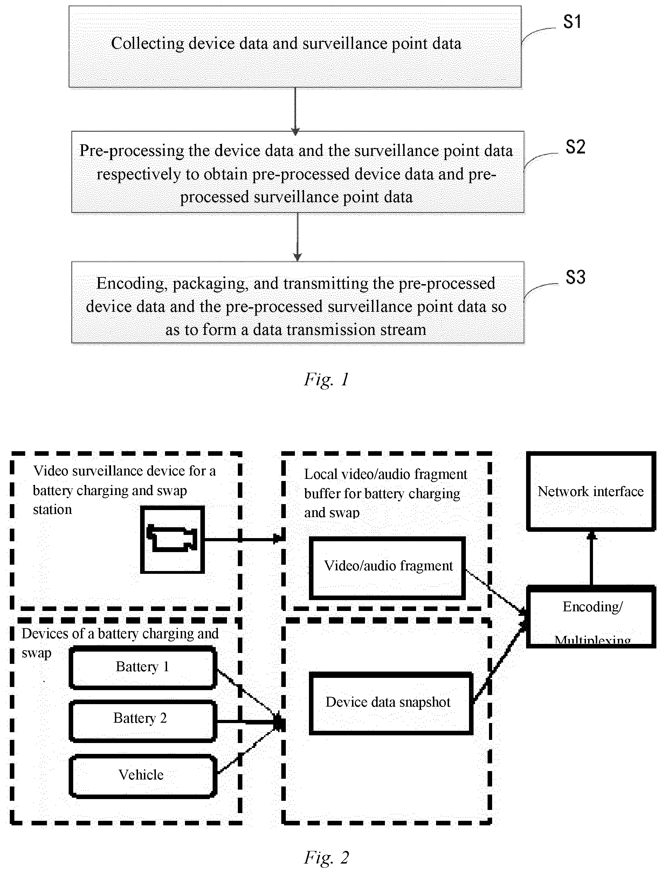

As shown in FIG. 1 and FIG. 2, an embodiment of the invention provides a surveillance video data processing method for a battery charging and swap station, which comprises the following steps.

Step S1, collecting device data and surveillance point data.

Before step S1 is performed, a control system for a battery charging and swap station is first started, and a surveillance parameter is initialized.

Step S1 specifically comprise the following steps.

Step S11, setting a device data detection point and a surveillance point that need to be monitored.

Step S12, collecting the corresponding device data according to the set device data detection point.

Step S13, collecting the corresponding surveillance point data according to the set surveillance point.

The real-time device data comprises one or more of battery information, battery charging and swap vehicle information, charging pile information, battery compartment information, water cooling system information, and limit switch information. The battery information comprises one or more of battery position information, battery charging and discharging currents, battery charging and discharging voltages, battery charging and discharging temperatures, a battery cell current, a battery cell voltage, and a battery cell temperature. The alarm information comprises one or more of battery alarm information, battery charging and swap vehicle alarm information, charging pile alarm information, water cooling system alarm information, limit switch alarm information, and environmental monitoring system alarm information; and It should be noted that the real-time device data is associated with and corresponding to the alarm information. For example, if the device data comprises charging current information, the corresponding alarm information may comprise over-current alarm information. The surveillance point video data comprises normal video image data, thermal imaging data, and the like. It may be understood that the above parameters are only examples, the invention is not limited to the above parameters, and an adjustment can be made according to specific needs in actual application.

Step S2, pre-processing the device data and the surveillance point data respectively to obtain pre-processed device data and pre-processed surveillance point data.

Step S2 specifically comprises the following sub-steps:
Step S21, setting a sampling frequency, recording the device data according to the sampling frequency, and caching the device data to generate a device data snapshot for a corresponding time point.

Table 1 is an example of a data snapshot for a corresponding time point T, which may be adjusted as needed in an actual application process.

**Table 1**

| Device number | Device position information | Time point | Real-time device data | Device alarm information |
|---|---|---|---|---|
| B1 | Battery slot coordinate information Video surveillance point | T | Voltage Current Battery status ... | Overtemperature alarm |

Step S22, setting a video format and a code rate, and encoding the surveillance point data according to the video format and the code rate so as to form a video fragment and an audio fragment.

Step S3, encoding, packaging, and transmitting the pre-processed device data and the pre-processed surveillance point data so as to form a data transmission stream.

Step S3 specifically comprises the following sub-steps:
Step S31, setting a video protocol, and carrying the device data snapshot according to an extension of the set video protocol.

It should be noted that the video fragment and the audio fragment may be directly carried in the content of the video protocol, or may be carried in the extension of the video protocol, which depends on the set video protocol.

Step S32, identifying the device data snapshot, the video fragment, and the audio fragment by groups, and packaging the device data snapshot, the video fragment, and the audio fragment according to a preset data transmission packet structure, so as to generate a data transmission packet.

In order to improve the operation and maintenance efficiency of the battery charging and swap station, the device data snapshot, the video fragment, and the audio fragment may also be marked with priorities, so that information with a higher priority can be preferentially displayed in a surveillance picture and processed preferentially. For example, the data snapshot comprises alarm information, and the priority of the data snapshot may be set to be higher than those of the video fragment and audio fragment, so that the alarm information on a severity level can be presented preferentially.

As an example, the data transmission packet structure may comprise: a group identifier data segment, a device number data segment, a time stamp data segment, a position information data segment, a priority data segment, and a content carrying data segment, wherein the content carrying data segment is used to carry the audio fragment, the video fragment, and the device data snapshot. Specific examples are shown in Table 2:

**Table 2**

| Group identifier | Device number | Time stamp | Position information | Priority | Carried content |
|---|---|---|---|---|---|
| GROUP 1 | DEVICE 1 | T1 | (x1, y1, z1) | 1 | Audio fragment |
| GROUP 2 | DEVICE 2 | T2 | (x2, y2, z2) | 1 | Video fragment |
| GROUP 3 | DEVICE 3 | T3 | (x3, y3, z3) | 2 | Device data snapshot |

Step S33, transmitting and delivering the data transmission packet through a network so as to form the data transmission stream.

The data transmission packet may be delivered according to the number and requirements of surveillance terminals, which can be specifically implemented by using technologies such as a content delivery network (CDN), a media delivery network (MDN), or the like.

The method further comprises the following steps. Step S4, decoding the data transmission stream and displaying a decoded result.

Step S4 specifically comprises the following sub-steps:
Step S41, decoding and caching the data transmission stream.

During the caching, data with a high priority can be processed first, such as alarm information on a high severity level, a surveillance picture thereof, and the like.

Step S42, reading, by a surveillance terminal, cached data, and displaying the cached data.

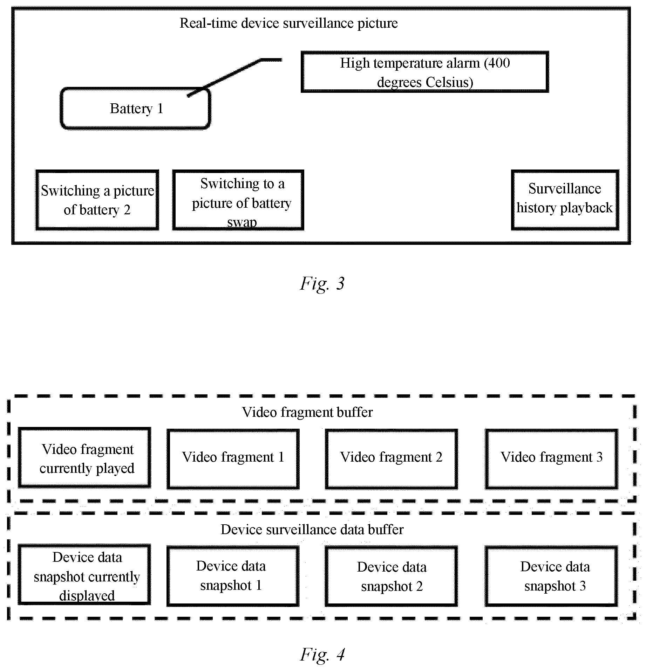

The surveillance terminal may draw the cached data on a video picture according to coordinate information of a device, so as to display a surveillance picture and related device information and alarm information, as shown in FIG. 3.

In the method, augmented reality (AR) scene display may be further performed, such as 360-degree viewing of the device or real-time display of internal status and details of a battery. The method specifically comprises: extracting and storing a device feature value according to device position information; and dynamically identifying a local feature of a corresponding device in a surveillance image when a surveillance terminal plays a video, matching the local feature with the device feature value, and performing AR scene display on the device in the surveillance image if the matching succeeds, wherein the displayed AR scene may be displayed in an area near the corresponding device in the surveillance image.

In the method, operations such as time shift, recording, playback, and the like for a video are locally supported by a surveillance terminal, which specifically comprises: storing the video fragment, the audio fragment, and the data snapshot in a memory buffer of the surveillance terminal according to a preset time, as shown in FIG. 4 (the audio fragment is omitted in FIG. 4, and audio fragment storage is similar to video fragment storage), and performing time shift and playback operations on a surveillance picture by setting a click button on the surveillance terminal or by dragging a progress bar. In an actual application process, a network storage device may also be used to support network time shift, network recording, network playback, and the like as needed. The recording process may be a process of persistently storing a video fragment, an audio fragment, and a device data snapshot in a file system.

In addition, based on the surveillance video data method for a battery charging and swap station, a plurality of control operations may be further performed, for example: in combination with a risk prediction and control module, real-time data, audio data, and video data of a battery charging and swap device are analyzed in real time to provide real-time early warning of potential risks and appropriate control; or in combination with an identification system and a cloud control module, audio data and video data are analyzed in real time to implement auxiliary control of a battery charging and swap process, for example, vehicle automatic authentication, ground lock unlocking, and the like; furthermore, a video surveillance fragment of the battery charging and swap station may be cached, and in combination with the identification system and a recommendation engine, a license plate and a vehicle type (such as the front face feature of the vehicle) are identified, and the video segment is recommended and delivered to a user with interest, wherein the user may view, with a mobile terminal, real-time pictures and dynamic data during battery charging and swap, so as to improve user experience. In addition, according to the invention, surveillance audio and video data of the battery charging and swap station is associated with real-time data and related alarm data of a device such as a battery, which is also applicable to the use of different video formats to extend real-time data and related alarm data of a carrying device for transmission. In this case, audio and video compression algorithms, code rate control, an error control algorithm, and an encryption algorithm are also applicable. For example, in order to improve the security of surveillance, DRM technologies can be subsequently used to encrypt transmitted content. According to the invention, quality of video encoding and a code rate of network transmission may be dynamically controlled according to a priority of an alarm, so as to collect more details for the analysis of the operation and maintenance personnel in the case of high-priority alarm, thereby improving the operation and maintenance efficiency and experience.

According to the surveillance video data method for a battery charging and swap station, real-time data and related alarm data of a device such as a battery are associated while a video surveillance system collects audio and video data of a station, which has a good real-time characteristic; and richer real-time information is provided at a video surveillance terminal, thereby improving the operation and maintenance efficiency and experience of the battery charging and swap station.

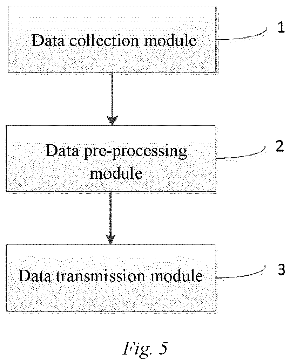

As shown in FIG. 5, an embodiment of the invention further provides a surveillance video data processing apparatus for a battery charging and swap station, which comprises a data collection module 1, a data pre-processing module 2, a data transmission module 3, and a data display module 4. The data collection module 1 is configured to collect device data and surveillance point data; the data pre-processing module 2 is configured to pre-process the device data and the surveillance point data respectively to obtain pre-processed device data and pre-processed surveillance point data; and the data transmission module 3 is configured to encode, package, and transmit the pre-processed device data and the pre-processed surveillance point data so as to form a data transmission stream.

The apparatus may further comprise: the data display module 4 configured to decode the data transmission stream and display a decoded result.

The data collection module 1 comprises a setting unit, a device data collection unit, a surveillance point data collection unit, wherein the setting unit is configured to set a device data detection point and a surveillance point that need to be monitored; the device data collection unit is configured to collect the corresponding device data according to the set device data detection point; and the surveillance point data collection unit is configured to collect the corresponding surveillance point data according to the set surveillance point.

The real-time device data comprises one or more of battery information, battery charging and swap vehicle information, charging pile information, battery compartment information, water cooling system information, and limit switch information. The battery information comprises one or more of battery position information, battery charging and discharging currents, battery charging and discharging voltages, battery charging and discharging temperatures, a battery cell current, a battery cell voltage, and a battery cell temperature. The alarm information comprises one or more of battery alarm information, battery charging and swap vehicle alarm information, charging pile alarm information, water cooling system alarm information, limit switch alarm information, and environmental monitoring system alarm information. For example, if the device data comprises charging current information, the corresponding alarm information may comprise over-current alarm information. The surveillance point video data comprises normal video image data, thermal imaging data, and the like. It may be understood that the above parameters are only examples, the invention is not limited to the above parameters, and an adjustment can be made according to specific needs in actual application.

The data pre-processing module 2 comprises a device data pre-processing unit and a surveillance point data processing unit. The device data pre-processing unit is configured to set a sampling frequency, record device data according to the sampling frequency, and cache the device data to generate a device data snapshot for a corresponding time point; and the surveillance point data processing unit is configured to set a video format and a code rate, and encode the surveillance point data according to the video format and the code rate so as to form a video fragment and an audio fragment.

Table 3 is an example of a data snapshot for a corresponding time point T, which may be adjusted as needed in an actual application process.

**Table 3**

| Device number | Device position information | Time point | Real-time device data | Device alarm information |
|---|---|---|---|---|
| B1 | Battery slot coordinate information Video surveillance point | T | Voltage Current Battery status ... | Overtemperature alarm |

The data transmission module 3 comprises a video protocol setting unit, a data transmission packet generation unit, and a data transmission unit. The video protocol setting unit is configured to set a video protocol, and carry the device data snapshot according to an extension of the set video protocol. It should be noted that the video fragment and the audio fragment may be directly carried in the content of the video protocol, or may be carried in the extension of the video protocol, which depends on the set video protocol. The data transmission packet generation unit is configured to identify the device data snapshot, the video fragment, and the audio fragment by groups, and package the device data snapshot, the video fragment, and the audio fragment according to a preset data transmission packet structure, so as to generate a data transmission packet. In order to improve the operation and maintenance efficiency of the battery charging and swap station, the device data snapshot, the video fragment, and the audio fragment may also be marked with priorities, so that information with a higher priority can be preferentially displayed in a surveillance picture and processed preferentially. For example, the data snapshot comprises alarm information, and the priority of the data snapshot may be set to be higher than those of the video fragment and audio fragment, so that the alarm information on a severity level can be presented preferentially. The data transmission unit is configured to transmit and deliver the data transmission packet through a network so as to form the data transmission stream. The data transmission packet may be delivered according to the number and requirements of surveillance terminals, which can be specifically implemented by using technologies such as a content delivery network (CDN), a media delivery network (MDN), or the like.

As an example, the data transmission packet structure may comprise: a group identifier data segment, a device number data segment, a time stamp data segment, a position information data segment, a priority data segment, and a content carrying data segment, wherein the content carrying data segment is used to carry the audio fragment, the video fragment, and the device data snapshot. Specific examples are shown in Table 4:

**Table 4**

| Group identifier | Device number | Time stamp | Position information | Priority | Carried content |
|---|---|---|---|---|---|
| GROUP 1 | DEVICE 1 | T1 | (x1, y1, z1) | 1 | Audio fragment |
| GROUP 2 | DEVICE 2 | T2 | (x2, y2, z2) | 1 | Video fragment |
| GROUP 3 | DEVICE 3 | T3 | (x3, y3, z3) | 2 | Device data snapshot |

The data display module 4 comprises a data caching module and a surveillance terminal. The data caching module is configured to decode and cache the data transmission stream; and the surveillance terminal is configured to read cached data and display the cached data. The surveillance terminal is further configured to draw the cached data on a video picture according to coordinate information of a device, so as to display a surveillance picture and related device information and alarm information, as shown in FIG. 3.

The apparatus further comprises an AR scene display module configured to perform AR scene display, such as 360-degree viewing of the device or real-time display of internal status and details of a battery. The AR scene display module is configured to: extract and store a device feature value according to device position information; and dynamically identify a local feature of a corresponding device in a surveillance image when a surveillance terminal plays a video, match the local feature with the device feature value, and perform AR scene display on the device in the surveillance image if the matching succeeds, wherein the displayed AR scene may be displayed in an area near the corresponding device in the surveillance image.

The apparatus further comprises a picture time-shift and rollback module, so that operations such as time shift, recording, playback, and the like for a video can be locally supported by a surveillance terminal, which specifically comprises: storing the video fragment, the audio fragment, and the data snapshot in a memory buffer of the surveillance terminal according to a preset time, as shown in FIG. 4 (the audio fragment is omitted in FIG. 4, and audio fragment storage is similar to video fragment storage), and performing time shift and playback operations on a surveillance picture by setting a click button on the surveillance terminal or by dragging a progress bar. In an actual application process, a network storage device may also be used to support network time shift, network recording, network playback, and the like as needed. The recording process may be a process of persistently storing a video fragment, an audio fragment, and a device data snapshot in a file system.

In addition, based on the surveillance video data apparatus for a battery charging and swap station, a plurality of control operations may be further performed, for example: in combination with a risk prediction and control module, real-time data, audio data, and video data of a battery charging and swap device are analyzed in real time to provide real-time early warning of potential risks and appropriate control; or in combination with an identification system and a cloud control module, audio data and video data are analyzed in real time to implement auxiliary control of a battery charging and swap process, for example, vehicle automatic authentication, ground lock unlocking, and the like; furthermore, a video surveillance fragment of the battery charging and swap station may be cached, and in combination with the identification system and a recommendation engine, a license plate and a vehicle type (such as the front face feature of the vehicle) are identified, and the video segment is recommended and delivered to a user with interest, wherein the user may view, with a mobile terminal, real-time pictures and dynamic data during battery charging and swap, so as to improve user experience. In addition, according to the invention, surveillance audio and video data of the battery charging and swap station is associated with real-time data and related alarm data of a device such as a battery, which is also applicable to the use of different video formats to extend real-time data and related alarm data of a carrying device for transmission. In this case, audio and video compression algorithms, code rate control, an error control algorithm, and an encryption algorithm are also applicable. For example, in order to improve the security of surveillance, DRM technologies can be subsequently used to encrypt transmitted content. According to the invention, quality of video encoding and a code rate of network transmission may be dynamically controlled according to a priority of an alarm, so as to collect more details for the analysis of the operation and maintenance personnel in the case of high-priority alarm, thereby improving the operation and maintenance efficiency and experience.

According to the surveillance video data apparatus for a battery charging and swap station, real-time data and related alarm data of a device such as a battery are associated while a video surveillance system collects audio and video data of a station, which has a good real-time characteristic; and richer real-time information is provided at a video surveillance terminal, thereby improving the operation and maintenance efficiency and experience of the battery charging and swap station.

According to a further aspect of the invention, a controller is provided, which comprises a memory and a processor, wherein the memory stores a computer program that, when executed by the processor, is capable of implementing the steps of the method.

According to a further aspect of the invention, a computer readable storage medium for storing a computer program is provided, wherein the program, when executed by a computer or a processor, implements the steps of the method.

The foregoing descriptions are merely preferred embodiments of the invention, and are not intended to limit the invention in any form. Although the invention has been disclosed as above by means of the preferred embodiments, these embodiments are not for the purpose of limiting the invention. A person skilled in the art can make alterations or modifications to the technical content disclosed above without departing from the technical solutions of the invention so as to arrive at equivalent embodiments with equivalent changes. However, any simple amendments, equivalent changes and modifications made to the above embodiments according to the technical essence of the invention without departing from the technical solutions of the invention are still within the scope of the technical solutions of the invention.

## Claims

1. A surveillance video data processing method for a battery charging and swap station, **characterized by** comprising the steps of:
collecting device data and surveillance point data;
pre-processing the device data and the surveillance point data respectively to obtain pre-processed device data and pre-processed surveillance point data; and
encoding, packaging, and transmitting the pre-processed device data and the pre-processed surveillance point data so as to form a data transmission stream.

2. The surveillance video data processing method for a battery charging and swap station according to claim 1, **characterized by**
further comprising:
decoding the data transmission stream and displaying a decoded result.

3. The surveillance video data processing method for a battery charging and swap station according to claim 1, **characterized in that**
said collecting device data and surveillance point data comprises the steps of:
setting a device data detection point and a surveillance point that need to be monitored;
collecting the corresponding device data according to the set device data detection point; and
collecting the corresponding surveillance point data according to the set surveillance point.

4. The surveillance video data processing method for a battery charging and swap station according to any one of claims 1 to 3, **characterized in that**
the device data comprises real-time device data and device alarm information, and the surveillance point data comprises surveillance point audio data and surveillance point video data.

5. The surveillance video data processing method for a battery charging and swap station according to claim 4, **characterized in that**
the real-time device data comprises one or more of battery information, battery charging and swap vehicle information, charging pile information, battery compartment information, water cooling system information, and limit switch information,
wherein the battery information comprises one or more of battery position information, battery charging and discharging currents, battery charging and discharging voltages, battery charging and discharging temperatures, a battery cell current, a battery cell voltage, and a battery cell temperature;
the alarm information comprises one or more of battery alarm information, battery charging and swap vehicle alarm information, charging pile alarm information, water cooling system alarm information, limit switch alarm information, and environmental monitoring system alarm information; and
the surveillance point video data comprises normal video image data and thermal imaging data.

6. The surveillance video data processing method for a battery charging and swap station according to claim 2, **characterized in that**
said pre-processing the device data and the surveillance point data respectively comprises the steps of:
setting a sampling frequency, recording the device data according to the sampling frequency, and caching the device data to generate a device data snapshot for a corresponding time point; and
setting a video format and a code rate, and encoding the surveillance point data according to the video format and the code rate so as to form a video fragment and an audio fragment.

7. The surveillance video data processing method for a battery charging and swap station according to claim 6, **characterized in that**
said encoding, packaging, and transmitting the pre-processed device data and the pre-processed surveillance point data so as to form a data transmission stream comprises:
setting a video protocol, and carrying the device data snapshot according to an extension of the set video protocol;
identifying the device data snapshot, the video fragment, and the audio fragment by groups, and packaging the device data snapshot, the video fragment, and the audio fragment according to a preset data transmission packet structure, so as to generate a data transmission packet; and
transmitting and delivering the data transmission packet through a network so as to form the data transmission stream.

8. The surveillance video data processing method for a battery charging and swap station according to claim 7, **characterized in that**
the data transmission packet structure comprises:
a group identifier data segment, a device number data segment, a time stamp data segment, a position information data segment, a priority data segment, and a content carrying data segment, wherein the content carrying data segment is used to carry the audio fragment, the video fragment, and the device data snapshot.

9. The surveillance video data processing method for a battery charging and swap station according to claim 8, **characterized in that**
said decoding the data transmission stream and displaying a decoded result comprises:
decoding and caching the data transmission stream; and
reading, by a surveillance terminal, cached data, and displaying the cached data.

10. The surveillance video data processing method for a battery charging and swap station according to claim 9, **characterized in that**
the surveillance terminal draws the cached data on a video picture according to coordinate information of a device, so as to display a surveillance picture and related device information and alarm information.

11. The surveillance video data processing method for a battery charging and swap station according to claim 1, **characterized in that**
the method further comprises: extracting and storing a device feature value according to device position information; and dynamically identifying a local feature of a corresponding device in a surveillance image when a surveillance terminal plays a video, matching the local feature with the device feature value, and performing AR scene display on the device in the surveillance image if the matching succeeds.

12. The surveillance video data processing method for a battery charging and swap station according to claim 6, **characterized in that**
the method further comprises: storing the video fragment, the audio fragment, and the data snapshot in a memory buffer of a surveillance terminal according to a preset time, and performing time shift and playback operations on a surveillance picture by setting a click button on the surveillance terminal or by dragging a progress bar.

13. A surveillance video data processing apparatus for a battery charging and swap station, **characterized by** comprising:
a data collection module configured to collect device data and surveillance point data;
a data pre-processing module configured to pre-process the device data and the surveillance point data respectively to obtain pre-processed device data and pre-processed surveillance point data; and
a data transmission module configured to encode, package, and transmit the pre-processed device data and the pre-processed surveillance point data so as to form a data transmission stream.

14. The surveillance video data processing apparatus for a battery charging and swap station according to claim 13, **characterized in that**
the apparatus further comprises:
a data display module configured to decode the data transmission stream and display a decoded result.

15. The surveillance video data processing apparatus for a battery charging and swap station according to claim 13, **characterized in that**
the data collection module comprises:
a setting unit configured to set a device data detection point and a surveillance point that need to be monitored;
a device data collection unit configured to collect the corresponding device data according to the set device data detection point; and
a surveillance point data collection unit configured to collect the corresponding surveillance point data according to the set surveillance point.

16. The surveillance video data processing apparatus for a battery charging and swap station according to any one of claims 13 to 15, **characterized in that**
the device data comprises real-time device data and device alarm information, and the surveillance point data comprises surveillance point audio data and surveillance point video data.

17. The surveillance video data processing apparatus for a battery charging and swap station according to claim 16, **characterized in that**
the real-time device data comprises one or more of battery information, battery charging and swap vehicle information, charging pile information, battery compartment information, water cooling system information, and limit switch information,
wherein the battery information comprises one or more of battery position information, battery charging and discharging currents, battery charging and discharging voltages, battery charging and discharging temperatures, a battery cell current, a battery cell voltage, and a battery cell temperature;
the alarm information comprises one or more of battery alarm information, battery charging and swap vehicle alarm information, charging pile alarm information, water cooling system alarm information, limit switch alarm information, and environmental monitoring system alarm information; and
the surveillance point video data comprises normal video image data and thermal imaging data.

18. The surveillance video data processing apparatus for a battery charging and swap station according to claim 14, **characterized in that**
the data pre-processing module comprises:
a device data pre-processing unit configured to set a sampling frequency, record device data according to the sampling frequency, and cache the device data to generate a device data snapshot for a corresponding time point; and
a surveillance point data processing unit configured to set a video format and a code rate, and encode the surveillance point data according to the video format and the code rate so as to form a video fragment and an audio fragment.

19. The surveillance video data processing apparatus for a battery charging and swap station according to claim 18, **characterized in that**
the data transmission module comprises:
a video protocol setting unit configured to set a video protocol, and carry the device data snapshot according to an extension of the set video protocol;
a data transmission packet generation unit configured to identify the device data snapshot, the video fragment, and the audio fragment by groups, and package the device data snapshot, the video fragment, and the audio fragment according to a preset data transmission packet structure, so as to generate a data transmission packet; and
a data transmission unit configured to transmit and deliver the data transmission packet through a network so as to form the data transmission stream.

20. The surveillance video data processing apparatus for a battery charging and swap station according to claim 19, **characterized in that**
the data transmission packet structure comprises:
a group identifier data segment, a device number data segment, a time stamp data segment, a position information data segment, a priority data segment, and a content carrying data segment, wherein the content carrying data segment is used to carry the audio fragment, the video fragment, and the device data snapshot.

21. The surveillance video data processing apparatus for a battery charging and swap station according to claim 13, **characterized in that**
a data display module comprises:
a data caching module configured to decode and cache the data transmission stream; and
a surveillance terminal configured to read cached data and display the cached data.

22. The surveillance video data processing apparatus for a battery charging and swap station according to claim 21, **characterized in that**
the surveillance terminal is further configured to draw the cached data on a video picture according to coordinate information of a device, so as to display a surveillance picture and related device information and alarm information.

23. The surveillance video data processing apparatus for a battery charging and swap station according to claim 13, **characterized in that**
the apparatus further comprises an AR scene display module configured to: extract and store a device feature value according to device position information; and dynamically identify a local feature of a corresponding device in a surveillance image when a surveillance terminal plays a video, match the local feature with the device feature value, and perform AR scene display on the device in the surveillance image if the matching succeeds.

24. The surveillance video data processing apparatus for a battery charging and swap station according to claim 18, **characterized in that**
the apparatus further comprises a picture time-shift and rollback module configured to store the video fragment, the audio fragment, and the data snapshot in a memory buffer of a surveillance terminal according to a preset time, and perform time shift and playback operations on a surveillance picture by setting a click button on the surveillance terminal or by dragging a progress bar.

25. A controller, comprising a memory and a processor, wherein the memory stores a computer program that, when executed by the processor, is capable of implementing the steps of the method according to any one of claims 1 to 12.

26. A computer readable storage medium for storing a computer program that, when executed by a computer or a processor, implements the steps of the method according to any one of claims 1 to 12.
